# EUROPÄISCHE PATENTANMELDUNG

(11) **EP 3 412 998 A1**
(43) Veröffentlichungstag der Anmeldung: **12.12.2018**
(21) Anmeldenummer: 17020245.1
(22) Anmeldetag: 08.06.2017
(51) Int. Cl.: F25J 3/04, C01B 13/02

(54) **VERFAHREN UND VORRICHTUNG ZUR TRENNUNG EINES TIEFKALTEN SAUERSTOFFHALTIGEN KOMPONENTENGEMISCHS**

(71) Anmelder: Linde Aktiengesellschaft, 80331 München (DE)
(72) Erfinder: Ferstl, Johann, 80995 München (DE); Windmeier, Christoph, 82538 Geretsried (DE)
(74) Vertreter: Imhof, Dietmar

(57) **Zusammenfassung**

Die vorliegende Erfindung betrifft ein Verfahren zur Trennung eines sauerstoffhaltigen Komponentengemischs, bei dem unter Verwendung des Komponentengemischs in einer Trenneinrichtung (1) durch Verdampfung und/oder Kondensation eine flüssige und eine gasförmige Phase gebildet werden. Es ist vorgesehen, dass ein oder mehrere Magnetfelder erzeugt werden, die einen oder mehrere homogene Feldbereiche in zumindest einem Teil eines oder mehrerer für die Verdampfung und/oder Kondensation eingerichteter Bereiche der Trenneinrichtung (1) aufweisen. Eine entsprechende Trenneinrichtung (1) ist ebenfalls Gegenstand der vorliegenden Erfindung.

## Beschreibung

Die vorliegende Erfindung betrifft ein Verfahren zur Trennung eines tiefkalten sauerstoffhaltigen Komponentengemischs und eine entsprechende Vorrichtung gemäß den Oberbegriffen der unabhängigen Patentansprüche.

### Stand der Technik

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Luftzerlegungsanlagen weisen Rektifikationskolonnensysteme auf, die als Zweikolonnensysteme, insbesondere als klassische Linde-Doppelkolonnensysteme, aber auch als Drei- oder Mehrkolonnensysteme ausgebildet sein können. Neben den Rektifikationskolonnen zur Gewinnung von Stickstoff und/oder Sauerstoff in flüssigem und/oder gasförmigem Zustand können Rektifikationskolonnen zur Gewinnung weiterer Luftkomponenten, insbesondere von Edelgasen, vorgesehen sein.

Der Wirkungsgrad der kryogenen Luftzerlegung wird maßgeblich durch das Siedeverhalten des Stoffsystems Sauerstoff-Stickstoff-Argon bestimmt. Die vorliegende Erfindung stellt sich die Aufgabe, hier Verbesserungen zu schaffen und insbesondere die Effizienz der Trennung zu verbessern.

### Offenbarung der Erfindung

Vor diesem Hintergrund werden ein Verfahren und eine Vorrichtung zur Trennung eines tiefkalten sauerstoffhaltigen Komponentengemischs mit den Merkmalen der jeweiligen unabhängigen Patentansprüche vorgeschlagen. Bevorzugte Ausgestaltungen der vorliegenden Erfindung sind jeweils Gegenstand der abhängigen Patentansprüche sowie der nachfolgenden Beschreibung.

Das Siedeverhalten des Stoffsystems Sauerstoff-Stickstoff-Argon lässt sich aufgrund der paramagnetischen Eigenschaften des Sauerstoffs im Gegensatz zu den diamagnetischen Eigenschaften von Stickstoff und Argon grundsätzlich durch magnetische Felder beeinflussen.

Paramagnetismus und Diamagnetismus sind Ausprägungsformen des Magnetismus in Materie. Paramagnetische Materialien entwickeln in einem externen Magnetfeld ein induziertes Magnetfeld in derselben Richtung und haben daher die Tendenz, in ein inhomogenes Magnetfeld hineinzuwandern. Diamagnetische Materialien entwickeln im Gegensatz zu paramagnetischen Materialien in einem externen Magnetfeld ein induziertes Magnetfeld in entgegengesetzter Richtung. Diamagnetische Materialien haben daher die Tendenz, aus einem inhomogenen Magnetfeld herauszuwandern. Ohne äußeres Magnetfeld besitzen paramagnetische und diamagnetische Materialien kein eigenes Magnetfeld, sie sind nichtmagnetisch. Bei Sauerstoff handelt es sich um das einzige Nichtmetall mit paramagnetischen Eigenschaften. Stickstoff und Argon weisen hingegen diamagnetische Eigenschaften auf.

Die CN 203771902 U schlägt am Beispiel einer Luftzerlegungsanlage in Einkolonnenausführung unterschiedliche Ausgestaltungen für magnetische Stoffaustauscheinbauten für die Rektifikationskolonne, insbesondere Trennböden und strukturierte Packungen, vor. Dabei wird das Prinzip der mechanischen Trennung von Stickstoff und Sauerstoff in einem starken Magnetfeldgradienten, also einem inhomogenen Magnetfeld, in Richtung der Schwerkraft ausgenutzt. Mit anderen Worten wird das inhomogene Magnetfeld hier eingesetzt, um auf die Sauerstoffmoleküle eine mechanische, durch das Magnetfeld bewirkte Kraft auszuüben. Um die Trennung zu ermöglichen, müssen die magnetischen Feldlinien daher senkrecht, d.h. parallel zur Richtung der Schwerkraft, liegen.

In der CN 105561728 A wird eine vergleichbare Trenneinrichtung vorgeschlagen, die dazu geeignet sein soll, flüssige Luft in einem inhomogenen Magnetfeld in flüssigen Stickstoff und flüssigen Sauerstoff aufzutrennen.

In der FR 2935472 A1 wird vorgeschlagen, den hydrostatischen Druck in einem Flüssigkeitsbad aus flüssigem Sauerstoff zu reduzieren. Hierzu ist eine Kraft erforderlich, was impliziert, dass ein stark inhomogenes Magnetfeld mit einem Gradienten entgegen der Schwerkraft handeln muss.

Die genannten, aus dem Stand der Technik bekannten Verfahren und Vorrichtungen weisen jedoch beträchtliche Nachteile auf, insbesondere bei Verwendung der bei der kryogenen Luftzerlegung typischerweise eingesetzten Apparate. Da eine Trennung tiefkalter sauerstoffhaltiger Komponentengemische typischerweise unter Verwendung von Rektifikationskolonnen oder anderer Apparate erfolgt, in denen Einbauten, insbesondere Trennböden, vorhanden sind, führt die aus einem magnetischen Feldgradienten resultierende Kraft auf die Sauerstoffmoleküle des Komponentengemischs zu erheblichen Problemen beim Ablaufen der Flüssigkeit von den jeweiligen Einbauten, insbesondere aus Trennböden. Mit anderen Worten wird die Flüssigkeit unerwünschterweise auf entsprechenden Einbauten "festgehalten".

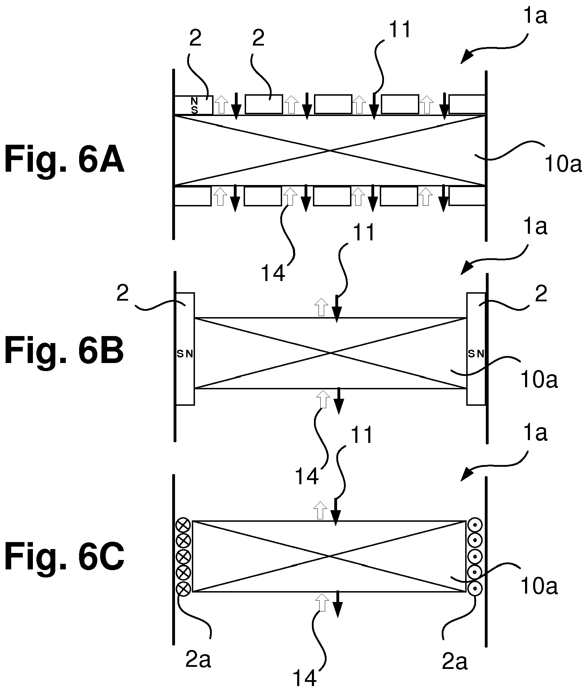

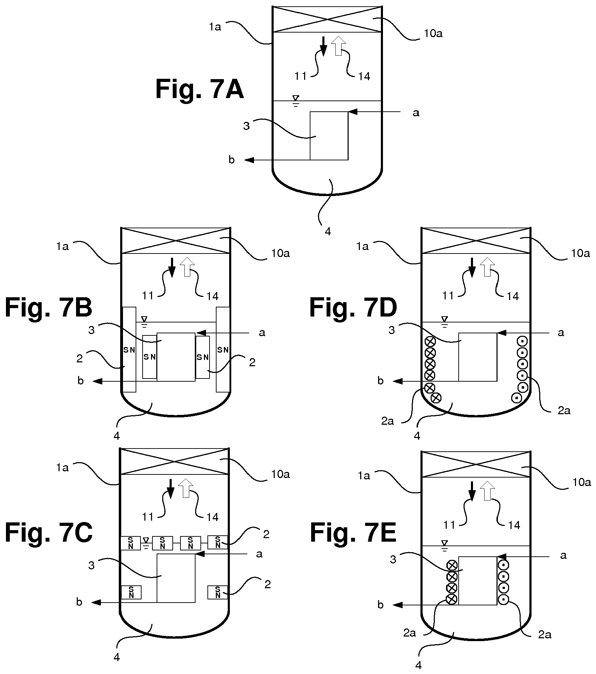

Ein wesentlicher Aspekt der vorliegenden Erfindung, der im Stand der Technik bisher nicht berücksichtigt wird, ist der, die Effekte eines homogenen Magnetfelds auszunutzen, die auf eine Veränderung des Phasengleichgewichts in einem entsprechenden Komponentengemisch zielen. Bei McBride, J. Am. Chem. Soc., 37(7), 1915, 1715-1718 sowie bei Biddulph und Meachin, Can. J. Chem. Eng., 56, 1978, 382-388 finden sich bereits Hinweise darauf, dass die relative Flüchtigkeit von Sauerstoff in flüssiger Luft durch ein äußeres Magnetfeld beeinflusst werden kann. Durch Verwendung eines homogenen Magnetfelds kann daher ein größerer Siedepunktsunterschied zwischen Sauerstoff und Stickstoff erzielt werden, wie insbesondere in den VLE-Diagrammen in den Figuren 6 und 7 bei Biddulph und Meachin gezeigt. Allerdings wird hier kein Einsatz zur Trennung eines entsprechenden Stoffsystems, insbesondere im Zuge der Luftzerlegung, vorgeschlagen oder angeregt.

Die vorliegende Erfindung schlägt dabei grundsätzlich die Einbringung von Magnetfeldern mit homogenen Feldbereichen in Apparate vor, die zumindest ein entsprechendes flüssiges Komponentengemisch, insbesondere aber ein zweiphasiges Komponentengemisch, enthalten, so dass es durch die durch das Magnetfeld verursachte Verschiebung des Phasengleichgewichts, insbesondere des Dampf-Flüssig-Gleichgewichts, entweder partiell zum Phasenwechsel innerhalb einer Phase (beispielsweise durch Ausgasen) oder zu einer verbesserten Auftrennung der einzelnen Komponenten des Stoffgemischs zwischen den beiden Phasen durch Wärmezu- und/oder -abfuhr kommt.

Die vorliegende Erfindung schlägt hierbei ein Verfahren zur Trennung eines tiefkalten sauerstoffhaltigen Komponentengemischs vor, bei dem unter Verwendung des Komponentengemischs in einer Trenneinrichtung durch Verdampfung und/oder Kondensation eine flüssige und eine gasförmige Phase gebildet werden. Wie auch nachfolgend erläutert, ermöglicht die vorliegende Erfindung eine Trennung auch in Einrichtungen wie Behältern und Leitungen, die herkömmlicherweise keine dedizierten Mittel zur Stofftrennung aufweisen. Weil durch den Einsatz der erfindungsgemäßen Maßnahmen auch hier eine Trennung möglich ist, wird nachfolgend auch für solche Einrichtungen der Begriff "Trenneinrichtung" verwendet.

Die vorliegende Erfindung ist dabei grundsätzlich für Trennungen geeignet, bei denen eine ausschließliche Verdampfung, eine ausschließliche Kondensation oder beides eingesetzt wird. Eine Verdampfung und Kondensation erfolgt beispielsweise in einer Rektifikationskolonne, es ist jedoch auch ein Einsatz bei anderen Kolonnen oder reinen Phasenabscheidern bzw. Tanks oder Leitungen möglich, in welchen lediglich eine Verdampfung bzw. lediglich eine Kondensation oder gar eine quasi-adiabate bis adiabate Prozessführung erfolgt.

Der Begriff "Trennung" kann dabei im hier verwendeten Sprachgebrauch eine reine Phasentrennung bezeichnen, bei der eine gebildete flüssige Phase eine vergleichbare oder im Wesentlichen dieselbe Zusammensetzung aufweist wie die korrespondierende Gasphase, in die sie verdampft oder aus der sie kondensiert, insbesondere jedoch auch eine zumindest teilweise stoffliche Trennung, bei der durch die Verdampfung und/oder Kondensation eine Anreicherung oder Abreicherung an einer oder mehreren Komponenten des Komponentengemischs auf Grundlage unterschiedlicher Siedepunkte der Komponenten erfolgt. Gerade letzteres ist im Rahmen der vorliegenden Erfindung möglich.

Bei einer "Rektifikationskolonne" handelt es sich im hier verwendeten Sprachgebrauch um eine Trenneinheit, die dafür eingerichtet ist, ein gasförmig oder flüssig oder in Form eines Zweiphasengemischs mit flüssigen und gasförmigen Anteilen, ggf. auch im überkritischen Zustand, eingespeistes Komponentengemisch durch Rektifikation zumindest teilweise aufzutrennen, also aus dem Komponentengemisch jeweils Reinstoffe oder zumindest Stoffgemische mit anderer Zusammensetzung zu erzeugen. Die Rektifikation umfasst dabei bekanntermaßen wiederholte Verdampfungs- und Kondensationsvorgänge, insbesondere auf bzw. unter Verwendung von hierfür geeigneten Einbauten, beispielsweise Trennböden oder geordneten oder ungeordneten Packungen. Grundsätzlich kann eine Rektifikationskolonne als eine im Gegenstrom kaskadierte Anordnungen von Destillationsstufen betrachtet werden.

Eine Rektifikationskolonne kann einen Sumpfverdampfer aufweisen. Hierbei handelt es sich um eine Einrichtung mit einem Wärmeaustauscher, der beheizt wird und dafür eingerichtet ist, eine im Sumpf der Rektifikationskolonne anfallende flüssige Fraktion, auch als Sumpfflüssigkeit bezeichnet, zu erwärmen. Mittels eines Sumpfverdampfers wird kontinuierlich ein Teil des Sumpfprodukts verdampft und gasförmig in die Rektifikationskolonne zurückgespeist. Eine Rektifikationskolonne weist ferner typischerweise einen Kopfkondensator auf, der in der Rektifikationskolonne aufsteigendes Gas kondensiert und in kondensiertem Zustand zumindest teilweise auf die Rektifikationskolonne zurückführt.

Ein entsprechender Kopfkondensator kann als Kondensatorverdampfer ausgebildet sein und damit einen Verflüssigungsraum und einen Verdampfungsraum aufweisen. Verdampfungs- und Verflüssigungsraum werden dabei typischerweise durch Gruppen von Passagen (Verflüssigungs- bzw. Verdampfungspassagen) eines Wärmetauschers gebildet, die untereinander in fluidischer Verbindung stehen. In dem Verflüssigungsraum wird die Kondensation eines ersten Fluidstroms durchgeführt, in dem Verdampfungsraum die Verdampfung eines zweiten Fluidstroms. Die beiden Fluidströme stehen dabei in indirektem Wärmetausch. Ein Kondensatorverdampfer kann in eine Rektifikationskolonne integriert sein. Kondensatorverdampfer können aber auch außerhalb einer entsprechenden Rektifikationskolonne angeordnet sein.

In einer Luftzerlegungsanlage kann insbesondere der die Hoch- und die Niederdrucksäule wärmetauschend verbindende, sogenannte Hauptkondensator als Kondensatorverdampfer ausgebildet sein. Dieser kann innerhalb oder außerhalb der Niederdrucksäule angeordnet sein. Ist er innerhalb der Niederdrucksäule angeordnet, kann es sich insbesondere um einen Badverdampfer handeln, der im Betrieb der Luftzerlegungsanlage in ein sauerstoffreiches Flüssigkeitsbad eingetaucht ist, das sich im unteren Bereich der Niederdrucksäule ausbildet. Auch ein Sumpfverdampfer kann insbesondere als Badverdampfer ausgebildet sein.

Auch andere Kolonnen, beispielsweise Waschkolonnen, Absorptionskolonnen, Flashkolonnen, Stripkolonnen und dergleichen, können im Rahmen der vorliegenden Erfindung eingesetzt werden. Sie können sich baulich von Rektifikationskolonnen insbesondere dadurch unterscheiden, dass sie keinen Sumpfverdampfer und/oder Kopfkondensator und/oder andersartige oder keine Einbauten aufweisen.

Zur Auslegung und spezifischen Ausgestaltung von entsprechenden Trenneinrichtungen sei auf einschlägige Lehrbücher verwiesen (siehe beispielsweise K. Sattler, "Thermische Trennverfahren: Grundlagen, Auslegung, Apparate", 3. Auflage, Wiley-VCH, Weinheim 2001).

Die vorliegende Erfindung kommt insbesondere, wie erwähnt, im Zusammenhang mit der Tieftemperaturzerlegung von Luft zum Einsatz, und kann hier beispielsweise zur Verbesserung der Trennung in einer Hochdrucksäule bzw. Drucksäule, einer Niederdrucksäule, einer Rohargonsäule, einer Reinargonsäule, einer Flashsäule oder einer Rohkryptonsäule zum Einsatz kommen. Zu den erwähnten Säulen bzw. Kolonnen und ihre Funktion sei auf die eingangs zitierte Fachliteratur verwiesen.

In dem erfindungsgemäßen Verfahren ist vorgesehen, dass ein oder mehrere Magnetfelder erzeugt werden, welches oder welche einen oder mehrere homogene Feldbereiche in zumindest einem Teil eines oder mehrerer für die Verdampfung und/oder Kondensation eingerichteter Bereiche der Trenneinrichtung aufweisen. Bei dem oder den die für die Verdampfung und/oder Kondensation eingerichteten Bereichen der Trenneinrichtung kann es sich beispielsweise um die zuvor erläuterten Einbauten einer Rektifikationskolonne bzw. entsprechende Einbauten anderer Kolonnen bzw. Säulen handeln. Allgemein handelt es sich um solche Bereiche, in denen die flüssige Phase insgesamt (beispielsweise in einem Behältersumpf) oder lokal (beispielsweise auf einem Trennboden) akkumuliert wird. Auch bei Kondensatorverdampfern, Badverdampfern, Behältern und Leitungen, die einer Rektifikationskolonne oder anderen Kolonne zugeordnet bzw. mit dieser fluidisch verbunden sind, kann es sich um Bereiche einer Trenneinrichtung handeln, die (zumindest auch) für die Verdampfung und/oder Kondensation eingerichtet sind. Bei Apparaten, die herkömmlicherweise keine dedizierten Bereiche zur Trennung aufweisen, werden diese durch die erfindungsgemäß eingesetzten Magnetfelder geschaffen.

Wie erwähnt, ist erfindungsgemäß vorgesehen, ein oder mehrere Magnetfelder zu erzeugen, die einen oder mehrere homogene Feldbereiche aufweisen. Diese sind in zumindest einem Teil des oder der für die Verdampfung und/oder Kondensation eingerichteten Bereiche der Trenneinrichtung vorgesehen. Hierbei ist unter der Angabe, dass der oder die homogenen Feldbereiche in "zumindest einem Teil" entsprechender Bereiche vorgesehen ist bzw. sind, zu verstehen, dass die homogenen Feldbereiche eine zwei- oder dreidimensionale räumliche Erstreckung aufweisen, die zumindest zum Teil einer entsprechenden zwei- oder dreidimensionalen räumlichen Erstreckung des oder der für die Verdampfung und/oder Kondensation eingerichteten Bereiche entspricht bzw. sich mit dieser deckt. Beispielsweise können ein oder mehrere homogene Feldbereiche in einem dreidimensionalen Teilbereich eines zur Verdampfung und/oder Kondensation eingerichteten Bereichs ausgebildet werden. Zumindest in einem Teil des oder der für die Verdampfung und/oder Kondensation eingerichteten Bereiche und darin befindliches Fluid wird daher im Rahmen der vorliegenden Erfindung dem oder den homogenen Feldbereichen ausgesetzt.

Auf diese Weise werden die bereits eingangs erwähnten Effekte erzielt. So wird durch die Bereitstellung der Magnetfelder bzw. der homogenen Feldbereiche in dem oder den für die Verdampfung und/oder Kondensation eingerichteten Bereichen insbesondere eine vorteilhafte Beeinflussung der relativen Flüchtigkeiten bzw. Siedepunkte in dem Stoffsystem Sauerstoff-Stickstoff-Argon erzielt, was es ermöglicht, diese Komponenten effektiver und/oder mit geringerem Aufwand zu trennen und hierdurch beispielsweise die Anzahl der Einbauten in einer Rektifikationskolonne zu verringern bzw. diese Einbauten einfacher zu gestalten oder die Länge der Rektifikationsstrecke und damit die Größe der Rektifikationskolonne zu verringern. Mit der durch die homogenen Feldbereiche verursachten Verschiebung des Phasengleichgewichts, insbesondere des Dampf-Flüssig-Gleichgewichts, kommt es zu einem verbesserten bzw. erleichterten Phasenwechsel innerhalb einer Phase (beispielsweise zu erleichtertem Ausgasen) oder zu einer verbesserten Auftrennung der einzelnen Komponenten des Komponentengemischs zwischen den Phasen. Insgesamt ermöglicht die Erfindung damit eine (mit gleichem Aufwand) bessere bzw. (bei verringertem Aufwand) gleiche Rektifikationsleistung. Die Vorteile der Erfindung entfalten sich dabei insbesondere in Anlagen zur kryogenen Luftzerlegung.

Ist hier davon die Rede, dass ein oder mehrere homogene Feldbereiche in zumindest einem Teil eines oder mehrerer für die Verdampfung und/oder Kondensation eingerichteter Bereiche der Trenneinrichtung vorgesehen sind bzw. ausgebildet werden, schließt dies nicht aus, dass in anderen Bereichen der Trenneinrichtung bzw. einer oder mehrerer für die Verdampfung und/oder Kondensation eingerichteter Bereiche auch inhomogene Feldbereiche bzw. Feldgradienten ausgebildet werden können. Hierbei kann es sich um Bereiche handeln, die an homogene Feldbereiche angrenzen und aufgrund von Randeffekten zustande kommen. Es ist jedoch auch möglich, entsprechende Feldgradienten bewusst an bestimmten Positionen der für die Verdampfung und/oder Kondensation eingerichteten Bereiche vorzusehen, um hier eine entsprechende mechanische Kraft auf das vorliegende Fluid, insbesondere ein Kondensat, auszuüben, und dieses hierdurch beispielsweise an bestimmten Positionen zu halten bzw. zu anderen Positionen zu transportieren. Stets sind jedoch im Rahmen der vorliegenden Erfindung auch ein oder mehrere homogene Feldbereiche vorgesehen, die, ohne eine entsprechende mechanische Kraft auszuüben, den eingangs erwähnten Effekt auf die Flüchtigkeit des Sauerstoffs besitzen und hierdurch, wie erwähnt, eine Trennung erleichtern.

Ist hier von "Sauerstoff" in einem Komponentengemisch die Rede, handelt es sich primär um Sauerstoffmoleküle (O₂), nicht um Sauerstoff, der zusammen mit anderen Elementen chemisch gebunden ist, beispielsweise Sauerstoff in Wassermolekülen oder in sauerstoffhaltigen Kohlenwasserstoffen. Die Trennung im Rahmen der vorliegenden Erfindung erfolgt im tiefkalten Bereich, worunter ein Temperaturbereich von unter -100 °C, insbesondere unter -150 °C, verstanden wird. Durch die im Rahmen der vorliegenden Erfindung mögliche Kondensation wird damit ein tiefkaltes, flüssiges Komponentengemisch bzw. ein entsprechender Reinstoff, beispielsweise flüssiger Sauerstoff, flüssiger Stickstoff und/oder flüssiges Argon, gebildet. Es versteht sich, dass unter "flüssigem Sauerstoff" oder "flüssigem Stickstoff" auch Komponentengemische verstanden werden, die überwiegend, beispielsweise zumindest zu 70%, 80% oder 90%, aus Sauerstoff bzw. Stickstoff bestehen, jedoch auch weitere Komponenten aufweisen können.

In dem oder den homogenen Feldbereichen des oder der Magnetfelder weicht der Mittelwert der magnetischen Feldstärke vorzugsweise um nicht mehr als 1 %, 5%, 10%, 20% oder 50% vom maximalen Wert der magnetischen Feldstärke innerhalb desselben Feldbereichs ab. Wie erwähnt wird die flüssige Phase innerhalb eines oder mehrere Volumina einer Trenneinrichtung, d.h. beispielsweise in einem Behältersumpf oder auf Trennböden, akkumuliert. Dabei weicht die mittlere magnetische Feldstärke eines jeweiligen Feldbereichs innerhalb dieses Volumens oder dieser Volumina jeweils um nicht mehr als den erwähnten Wert von der maximalen Feldstärke ab. Auf diese Weise kann vermieden werden, dass eine unvorteilhafte mechanische Kraft in dem oder den homogenen Feldbereichen auf das zu trennende Fluid ausgeübt wird und hierdurch beispielsweise ein Abfließen von einem Kolonnenboden erschwert wird, wo dies nicht erwünscht ist. Wie erwähnt, kann jedoch in anderen Bereichen auch ein Feldgradient bereitgestellt werden, um genau diesen Effekt zu erzielen oder beispielsweise Fluid in eine bestimmte Richtung zu fördern. Auch eine Reduzierung eines hydrostatischen Drucks kann hierdurch bewirkt werden.

Unterschiedliche homogene Feldbereiche eines Magnetfelds oder unterschiedlicher Magnetfelder können im Rahmen der vorliegenden Erfindung unterschiedliche, jeweils im obigen Sinne "homogene" Feldstärken aufweisen. Auf diese Weise ist es möglich, unterschiedliche Realeffekte an unterschiedlichen Positionen zu erzielen und beispielsweise flexibel an die jeweils vorliegende Zusammensetzung des Komponentengemischs, insbesondere dessen Sauerstoffgehalt, anzupassen.

Vorzugsweise erstrecken sich im Rahmen der vorliegenden Erfindung der oder die homogenen Feldbereiche über zumindest 1%, 5%, 10%, 20%, 50%, 90% oder 99% des oder der für die Verdampfung und/oder Kondensation eingerichteten Bereiche bzw., wenn hier eine entsprechende flüssige Phase akkumuliert wird, eines Volumens dieser Phase. Auf diese Weise kann ein großer oder der überwiegende Teil des oder der entsprechenden Bereiche dem oder den homogenen Feldbereichen ausgesetzt und damit dort eine vergleichbare Wirkung erzielt werden.

Wie bereits ausführlich erwähnt, kann als die Trenneinrichtung eine Rektifikationskolonne verwendet werden, wobei der oder die für die Verdampfung und/oder Kondensation eingerichteten Bereiche als ein oder mehrere Trennböden, Flüssigkeitssammler oder Flüssigkeitsverteiler, Badverdampfer und/oder Badkondensatoren ausgebildet sind. Die Einbringung von Magnetfeldern bzw. homogenen Feldbereichen solcher Magnetfelder in Orte mit hohem lokalen Flüssigkeitsinhalt weist, wie bereits angesprochen, das Potential auf, auch außerhalb der dedizierten Stoffaustauscheinbauten, insbesondere der Trennböden, einer Rektifikationskolonne in erheblichem Maße zur Stofftrennung beizutragen. Durch die mittels der homogenen Feldbereiche induzierten Realeffekte innerhalb von Flüssigkeiten kommt es zur spontanen Phasentrennung, z.B. Ausgasen, unter gleichzeitiger Änderung der Fluidtemperatur.

Als entsprechende Bereiche seien explizit der Sumpf entsprechender Rektifikationskolonnen, Mantelräume von Kopfkondensatoren, Flüssigkeitssammler, horizontale und vertikale Zuleitungen von Flüssigkeitsverteilern, Rohrleitungen mit reinen Flüssigkeitsströmungen, insbesondere aber mehrphasigen Strömungen, beispielsweise stromab von Entspannungsvorrichtungen wie Expandern und Joule-Thomson-Ventilen, genannt. Bei allen diesen Bereichen handelt es sich somit im Rahmen der vorliegenden Erfindung um für die Verdampfung und/oder Kondensation eingerichtete Bereiche einer Trenneinrichtung. Insbesondere kann es sich hierbei auch beispielsweise um Phasenabscheider, Tanks und/oder Hohlräume innerhalb strukturierter oder unstrukturierter Stoffaustauschelemente, insbesondere einer Rektifikationskolonne, handeln. Auch herkömmlicherweise nicht dediziert für eine Trennung vorgesehene Bereiche können damit im Rahmen der vorliegenden Erfindung für eine entsprechende Trennung genutzt werden.

Gemäß einer Ausgestaltung der vorliegenden Erfindung kann vorgesehen sein, das oder die Magnetfelder unter Verwendung eines oder mehrerer Permanentmagneten zu erzeugen. Beispielsweise kann, um ein räumlich begrenztes, möglichst homogenes Magnetfeld zu erzeugen, eine Anordnung von parallelen Magnetplatten eingesetzt werden. Auch eine Formanpassung an eine Trenneinrichtung, beispielsweise an die Form einer Rektifikationskolonne, ist möglich. Dies kann insbesondere, wie auch in der Figurenbeschreibung weiter erläutert, in einem Trennboden einer Rektifikationskolonne erfolgen. Die Magneten können dabei auch teilweise in einen Gasraum oberhalb des Trennbodens ragen. Die Permanentmagneten können insbesondere unter Verwendung einer Legierung hergestellt sein, deren Basis Neodym, Samarium, Eisen, Nickel oder Aluminium oder einer Mischung zumindest zweier dieser Komponenten ist.

Alternativ oder zusätzlich dazu ist es jedoch auch möglich, das oder die Magnetfelder unter Verwendung eines oder mehrerer Elektromagneten zu erzeugen. Auch eine Kombination von Elektromagneten und Permanentmagneten kann eingesetzt werden. Der oder die Elektromagneten können unter Verwendung von Gleich- oder Wechselstrom betrieben werden. Die Elektromagneten können konventionelle Leiter oder Supraleiter, insbesondere Hochtemperatursupraleiter, aufweisen. Der Einsatz konventioneller Leiter ermöglicht aufgrund des vorhandenen ohmschen Widerstands gleichzeitig eine Beheizung eines entsprechenden Flüssigkeitsvolumens. Hochtemperatursupraleiter, deren Sprungtemperatur insbesondere oberhalb von 20 K, vorteilhafterweise oberhalb von 60 K, besonders vorteilhaft oberhalb von 90 K liegt, können auf dem Gebiet der kryogenen Trennung mit besonderen Vorteil eingesetzt werden, da sie mit den vorhandenen kryogenen Medien gekühlt werden können. Hierbei kann die Kühlung der Elektromagneten durch Erwärmung oder Verdampfung eines kryogenen Mediums, vorzugsweise im direkten Kontakt, d.h. ohne Zwischenkreislauf, aber auch über den Einsatz einer Wärmepumpe zwischen der Betriebstemperatur des oder der Elektromagneten und dem Siedepunkt der kryogenen Flüssigkeit bzw. einer Austrittstemperatur des kryogenen Mediums, erfolgen.

Entsprechende Magneten können sowohl im direkten Kontakt zu dem sauerstoffhaltigen Komponentengemisch, insbesondere einem entsprechenden Kondensat, aber auch im indirekten Kontakt, d.h. außerhalb der jeweiligen Wand eines das Komponentengemisch beinhaltenden Volumens, beispielsweise außerhalb einer Rektifikationskolonne, eines Behälters oder einer Rohrleitung, angeordnet werden. Im ersteren Fall kann zur Vermeidung einer gegebenenfalls durch die erhöhte Sauerstoffkonzentration bedingten erhöhten Korrosion eine geeignete Beschichtung gewählt werden. Ein erfindungsgemäßes Verfahren kann also in einer besonders bevorzugten Ausführungsform umfassen, dass der oder die Magneten (Permanent- und/oder Elektromagneten) mit einer Beschichtung zur Verbesserung ihrer chemischen Beständigkeit gegenüber Sauerstoff versehen sind. Diese kann auch zur Vermeidung einer Schädigung ggf. weniger tieftemperaturfester diamagnetische Materialien durch thermische Zyklen eingesetzt werden. Eine entsprechende Beschichtung kann insbesondere auf Basis von tieftemperaturfestem Edelstahl und/oder Aluminium, Nickel, Kupfer, Kobalt oder Chrom sowie deren Legierungen und Basislegierungen ausgeführt sein. Generell sind Beschichtungen, die Metalle wie beispielsweise Nickel, Kupfer, Aluminium, Eisen, Titan, Platin, Cobalt sowie deren Basislegierungen (z.B. Hasteloy, Inconnel, Monel) und Legierungen (Messing, Bronze, V2A, V4A) aufweisen, als Beschichtungen geeignet. Die Beschichtung kann auch auf Basis eines Metalloxids, Halbmetalloxids oder eines keramischen Werkstoffs ausgeführt sein. Ferner ist es möglich, Kunststoffe auf Basis von Fluoropolymeren, Polyamiden und/oder Nitrilpolymeren wie beispielsweise PTFE und FEP sowie Keramiken in ein- oder mehrschichtiger Ausbildung umfassen.

In einer besonders bevorzugten Ausgestaltung der Erfindung können der oder die Magnete mit einer Beschichtung, Armierung oder Verstärkung aus einem Hilfsmaterial zur Verbesserung ihrer mechanischen Eigenschaften, insbesondere unter Temperaturwechseln versehen sein.

Die vorliegende Erfindung erstreckt sich auch auf eine Trenneinrichtung, die zur Trennung eines sauerstoffhaltigen Komponentengemischs eingerichtet ist, wobei die Trennung umfasst, unter Verwendung des Komponentengemischs in der Trenneinrichtung durch Verdampfung und/oder Kondensation eine flüssige und eine gasförmige Phase zu bilden. Diese Trenneinrichtung zeichnet sich durch Mittel aus, die dafür eingerichtet sind, ein oder mehrere Magnetfelder zu erzeugen, die einen oder mehrere homogene Feldbereiche in zumindest einem Teil eines oder mehrerer für die Verdampfung und/oder Kondensation eingerichteter Bereiche der genannten Trenneinrichtung aufweisen.

Zu Merkmalen und Vorteilen einer derartigen Trenneinrichtung sei auf die obigen Erläuterungen bezüglich des vorgeschlagenen Verfahrens und seiner Ausgestaltungen ausdrücklich verwiesen. Entsprechendes gilt auch für eine Trenneinrichtung gemäß einer besonders bevorzugten Ausgestaltung, die zur Durchführung eines Verfahrens gemäß einer der zuvor erläuterten Verfahrensvarianten eingerichtet ist.

Wenngleich zuvor nicht erläutert, kann im Rahmen der vorliegenden Erfindung auch das Einbringen von Magnetfeldern mit homogenen Feldanteilen in Apparate zur Wärmeübertragung, insbesondere in Plattenwärmetauscher, beispielsweise einen Hauptwärmetauscher, einen Unterkühlungsgegenströmer, einen Hauptkondensator oder einen Kaskadenkondensator einer Luftzerlegungsanlage erfolgen. Dies kann insbesondere in Form des Einbringens von magnetischen Materialien in den Wärmeübertragungsapparat, die Fertigung einzelner Bestandteile wie Fins (z.B. Lamellen, Rippen), Sidebars und Trennblechen aus magnetischen Materialien, die durchgehende oder partielle Beschichtung einzelner Bestandteile wie Fins, Sidebars und Trennblechen mit magnetischen Materialien oder das Anlegen eines äußeren Magnetfelds, beispielsweise durch Platzierung des Wärmetauschers innerhalb der Spule eines Elektromagneten, erfolgen, wie insbesondere auch zu den Figuren 7B, 7D und 7E unter Bezugnahme auf Badverdampfer erläutert.

Die Erfindung wird nachfolgend unter Bezugnahme auf die beigefügten Zeichnungen näher erläutert, die bevorzugte Ausführungsformen der Erfindung vor dem Hintergrund des Standes der Technik veranschaulichen.

### Kurze Beschreibung der Zeichnungen

Figur 1 veranschaulicht Trennböden in einer Rektifikationskolonne.
Figur 2 veranschaulicht ein Magnetfeld zwischen parallelen Magnetplatten.
Figur 3 veranschaulicht Trennböden in einer Rektifikationskolonne gemäß einer Ausführungsform der vorliegenden Erfindung.
Figur 4 veranschaulicht Trennböden in einer Rektifikationskolonne gemäß einer Ausführungsform der vorliegenden Erfindung.
Figur 5 veranschaulicht Trennböden in einer Rektifikationskolonne gemäß einer Ausführungsform der vorliegenden Erfindung.
Figuren 6A bis 6C veranschaulichen kontinuierliche Trennbereiche in Rektifikationskolonnen gemäß Ausführungsformen der vorliegenden Erfindung.
Figuren 7A bis 7E veranschaulichen Badverdampfer gemäß Ausführungsformen der vorliegenden Erfindung.
Figuren 8A bis 8E veranschaulichen Phasenabscheider gemäß Ausführungsformen der vorliegenden Erfindung.
Figur 9 veranschaulicht einen Flüssigkeitssammler und Flüssigkeitsverteiler gemäß einer Ausführungsform der vorliegenden Erfindung.
Figuren 10A bis 10F veranschaulichen Rohre und Kanäle gemäß Ausführungsformen der vorliegenden Erfindung.

In den Figuren sind einander entsprechende Elemente, insbesondere Magneten, Spulen, Trenneinrichtungen, Trenn- bzw. Siebböden, Packungselemente bzw. - abschnitte und dergleichen, falls sie gleiche oder vergleichbare Funktionen erfüllen und/oder gleich oder gleichartig ausgebildet oder ausbildbar sind, mit identischen Bezugszeichen angegeben und werden der Übersichtlichkeit halber nicht wiederholt erläutert.

### Ausführliche Beschreibung der Zeichnungen

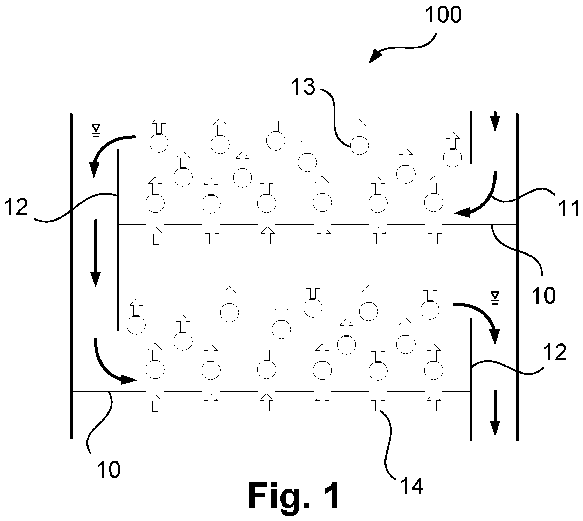

Figur 1 veranschaulicht die Funktion mit 10 bezeichneter Trennböden in einer nur abschnittsweise dargestellten Rektifikationskolonne 100, welche erfindungsgemäß ausgestaltet werden können.

Auf den Trennböden 10 staut sich eine entsprechend den ausgefüllten Fluidpfeilen von oben nach unten ablaufende Flüssigkeit an hierfür eingerichteten Wehren 12. Von unten nach oben durchtreten Gasblasen 13 die angestaute Flüssigkeit entsprechend den dargestellten, nicht ausgefüllten Fluidpfeilen 14. Durch wiederholte Stoffaustauschvorgänge zwischen der Gasphase insbesondere der Gasblasen 13 und der angestauten Flüssigkeit, d.h. wiederholte Verdampfungs- und Kondensationsvorgänge, kommt es zu einer zunehmenden Anreicherung der leichter flüchtigen Komponenten eines entsprechend getrennten Komponentengemischs in der Gasphase in Richtung des Kopfs der Rektifikationskolonne 100.

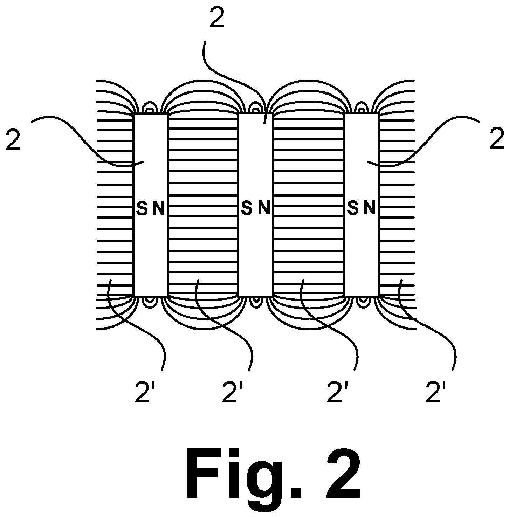

Figur 2 veranschaulicht ein Magnetfeld zwischen parallelen Magnetplatten 2, wie es beispielsweise in einer Rektifikationskolonne 1 gemäß Figur 1 eingesetzt werden kann. Zwischen den Magnetpolen N und S der Magnetplatten 2 sind jeweils Feldlinien veranschaulicht. Diese verlaufen in Bereichen 2'jeweils parallel, es liegen also damit homogene Feldbereiche vor. Gemäß einer Ausgestaltung der vorliegenden Erfindung, wie sie insbesondere in den nachfolgenden Figuren veranschaulicht ist, werden derartige homogene Feldbereiche in einer Rektifikationskolonne ausgebildet.

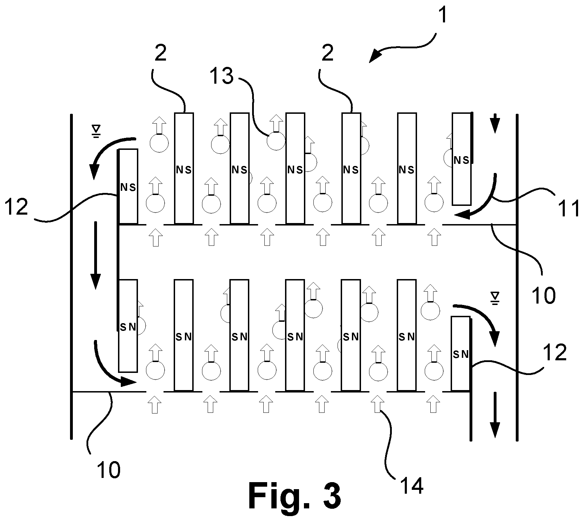

Figur 3 veranschaulicht Trennböden in einer Rektifikationskolonne gemäß einer Ausführungsform der vorliegenden Erfindung, die hier mit 1 bezeichnet ist. Die Rektifikationskolonne 1 ist entsprechend der in Figur 1 veranschaulichen Rektifikationskolonne 100 ausgebildet, so dass auf die dortigen Erläuterungen verwiesen wird. Auch die Rektifikationskolonne 1 ist nur abschnittsweise dargestellt. In der in Figur 3 veranschaulichten Ausführungsform sind zusätzlich Magnetplatten 2, wie sie grundsätzlich bereits in Figur 2 veranschaulicht sind, vorgesehen. Die Magnetplatten 2 sind nicht sämtlich mit Bezugszeichen versehen, jedoch sind jeweils die entsprechenden Magnetpole N und S veranschaulicht. Wie in Figur 2 veranschaulicht, bilden sich zwischen diesen innerhalb einer flüssigen Phase jeweils homogene Feldbereiche aus, so dass hier die Flüchtigkeit in der oben erläuterten Weise beeinflusst und damit eine entsprechende Trennung verbessert wird.

Gemäß der in Figur 3 veranschaulichten Ausführungsform wird also das wird Teil des Fluidvolumens eines Trennbodens einer Rektifikationskolone 1 mit einem möglichst homogenen, d.h. gradientenarmen, Magnetfeld durchsetzt. Die Stärke des Magnetfelds kann auf jedem Boden entsprechend der Ausprägung der induzierten Realeffekte unterschiedlich sein. Hierbei wird gemäß der in Figur 3 veranschaulichten Ausführungsform eine Vielzahl von parallelen Magneten mit einer Magnetisierung senkrecht zur Schwerkraft derart in den Bereich des Gas-Flüssig-Kontakts platziert, dass sich insbesondere im Bereich des Flüssigkeitstands ein homogenes Magnetfeld aufbaut. Hierzu können die Magneten insbesondere auch teilweise in den Gasraum oberhalb des Trennbodens ragen, wie in Figur 3 veranschaulicht.

Grundsätzlich kann in der in Figur 3 veranschaulichten Ausführungsform der vorliegenden Erfindung eine regelmäßige, parallele oder konzentrische Anordnung einer Vielzahl von senkrechten Permanentmagneten vorgesehen sein. Einzelne Magneten können dabei auch eine Krümmung in Richtung der Kolonnenkrümmung aufweisen, es kann sich also um Zylinderschalen mit radialer Magnetisierung handeln. Eine radiale Variation der Magnetstärken ist möglich, so dass sich in radialer Richtung ein möglichst homogenes Magnetfeld einstellt. Hierzu können beispielsweise radial weiter außen stärkere Magneten als radial weiter innen platziert werden. Auch eine horizontale Unterteilung der Magneten und eine entsprechende unterschiedliche Ausbildung des Magnetfelds ist grundsätzlich möglich.

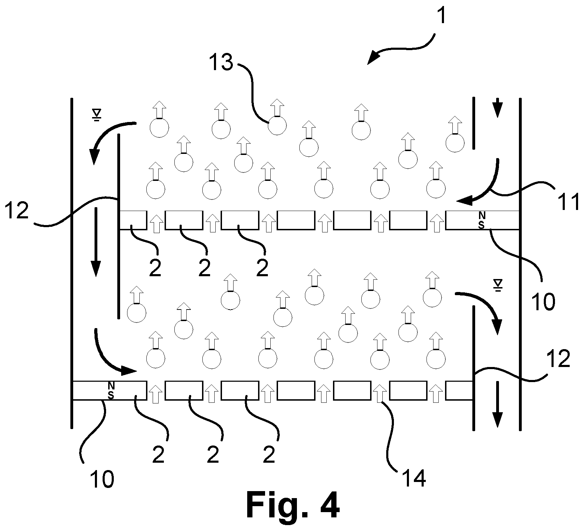

Figur 4 veranschaulicht Trennböden in einer Rektifikationskolonne gemäß einer Ausführungsform der vorliegenden Erfindung, die hier, wie bereits in Figur 3, mit 1 bezeichnet ist. Die Rektifikationskolonne 1 ist auch hier grundsätzlich entsprechend der in Figur 1 veranschaulichen Rektifikationskolonne 100 ausgebildet, so dass auf die dortigen Erläuterungen verwiesen wird. In der in Figur 4 veranschaulichten Ausführungsform sind Magnetplatten 2 vorgesehen, die jedoch im Gegensatz zu der in Figur 3 veranschaulichten Ausführungsform horizontal angeordnet sind. Die Magnetplatten 2 sind auch hier nicht sämtlich mit Bezugszeichen versehen und lediglich an zwei Magnetplatten 2 unten links und oben rechts in der Zeichnung sind jeweils die entsprechenden Magnetpole N und S veranschaulicht. Auch zwischen diesen Magnetplatten 2 bilden sich innerhalb einer flüssigen Phase jeweils homogene Feldbereiche aus, so dass auch hier die Flüchtigkeit in der oben erläuterten Weise beeinflusst und damit eine entsprechende Trennung verbessert wird.

In der in Figur 4 veranschaulichten Ausführungsform wird, mit anderen Worten, eine Vielzahl von parallelen Magneten mit einer Magnetisierung in Richtung der Schwerkraft angeordnet, so dass sich innerhalb einer flüssigen Phase ein möglichst homogenes Magnetfeld senkrecht zur Schwerkraft ausbildet. Hierbei kann eine Vielzahl von einzelnen Magnetplatten ober- oder unterhalb eines entsprechenden Trennbodens 10 angeordnet werden. Alternativ dazu ist auch möglich, eine durchgängige Magnetplatte mit Durchbrüchen entsprechend der Durchbrüche am Trennboden 10 bereitzustellen. Anstelle der Verwendung separater Magnetplatten 2 ist es grundsätzlich auch möglich, einen Trennboden 10 aus magnetischem und magnetisiertem Material einzusetzen.

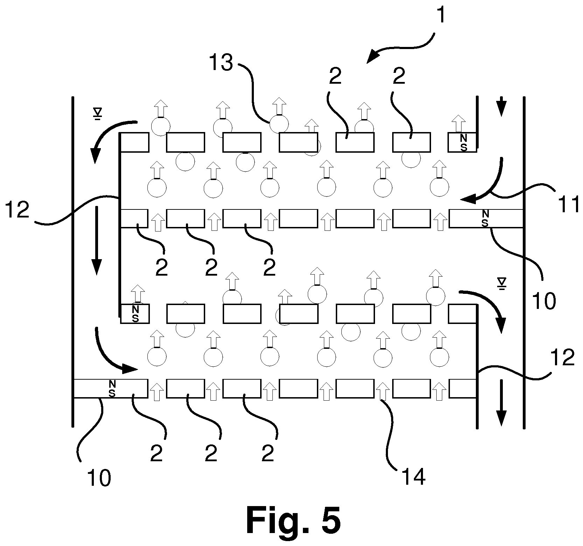

Figur 5 veranschaulicht Trennböden in einer Rektifikationskolonne, die auch hier mit 1 bezeichnet ist, gemäß einer weiteren Ausführungsform der vorliegenden Erfindung. Die Ausführungsform gemäß Figur 5 kann als Erweiterung der Ausführungsform gemäß Figur 4 verstanden werden, so dass die zu dieser Ausführungsform getroffenen Erläuterungen auch hier gelten. Zusätzlich zu den an oder in der Nähe der Trennböden ausgebildeten Magnetplatten bzw. der dort vorgenommenen Maßnahmen sind hier zusätzlich in dem Flüssigkeitsvolumen weitere Magnetplatten vorgesehen, die ebenfalls nicht sämtlich mit Bezugszeichen versehen und lediglich an zwei Positionen mit den Magnetpolen N und S gekennzeichnet sind.

Die Ausführungsform gemäß Figur 5 schlägt damit insbesondere die Verwendung von magnetischen Zwischeneinbauten, die, bereits zu Figur 4 erläutert, auch in Form von durchgängigen Magnetplatten oder entsprechend magnetisierten Materialien mit Durchbrüchen ausgebildet sein können, vor, wodurch sich insbesondere die Magnetfeldstärke und Homogenität innerhalb des Flüssigkeitsvolumens erhöhen und damit Trennleistung weiter verbessern lässt.

Die Figuren 6A bis 6C veranschaulichen kontinuierliche Trennbereiche, beispielweise auf Basis von strukturierten Packungen oder Füllkörpern, von kontinuierlichen Rektifikationskolonnen gemäß Ausführungsformen der vorliegenden Erfindung. Diese sind jeweils nur in Form eines Ausschnitts veranschaulicht und jeweils insgesamt mit 1 a bezeichnet. Einzelne, kontinuierliche Trennsegmente sind jeweils mit 10a bezeichnet. Eine kontinuierliche Rektifikationskolonne 1a kann eine Vielzahl entsprechender kontinuierlicher Trennsegmente 10a aufweisen.

Die in den Figuren 6A und 6B veranschaulichten Ausführungsformen umfassen dabei eine Anordnung von Magneten 2 bzw. entsprechenden Magnetplatten 2 derart oberhalb und unterhalb bzw. seitlich der Trennsegmente 10a, dass es zur Ausbildung eines Magnetfelds über die gesamte Kolonnenhöhe kommt. Die kontinuierliche Trennbereiche (Packungen, Füllkörper) können vorzugsweise aus einem diamagnetischen Material gefertigt werden. Auch bei einer kontinuierlichen Rektifikationskolonne 1a können daher die zuvor mehrfach erläuterten erfindungsgemäßen Vorteile der Einsatz homogener magnetischer Feldbereiche erzielt werden.

In der in Figur 6C veranschaulichten Ausführungsform ist ein entsprechendes Trennsegments 10a von einer Magnetspule 2a, die hier im Querschnitt gezeigt ist, umgeben. Die Stromrichtung ist angedeutet, es versteht sich, dass diese auch in entgegengesetzter Richtung ausgebildet sein kann. Im Gegensatz zu den Figuren 6A und 6B veranschaulichten Ausführungsformen ist hier also ein Elektromagnet bereitgestellt, der wie zuvor erläutert ausgebildet sein bzw. betrieben werden kann. Insbesondere kann hierbei ein Supraleiter, vorzugsweise ein Hochtemperatursupraleiter, eingesetzt werden, der zugleich von der Flüssigkeit in der kontinuierlichen Rektifikationskolonne 1a gekühlt werden kann, wie ebenfalls erläutert. Grundsätzlich ist eine in Figur 6C veranschaulichte Magnetspule 2a auch in einer Rektifikationskolonne 1 mit Trennböden, wie sie in den Figuren 1, 3, 4 und 5 veranschaulicht ist, einsetzbar. Auch eine Kombination von Permanentmagneten und Elektromagneten ist, wie ebenfalls bereits erläutert, möglich.

Die Figuren 7A bis 7E veranschaulichen Badverdampfer gemäß Ausführungsformen der vorliegenden Erfindung. In Figur 7A ist dabei die grundsätzliche Funktion eines entsprechenden Badverdampfers veranschaulicht. Bei dem Badverdampfer handelt es sich im Wesentlichen um einen Wärmetauscher 3, der in ein Flüssigkeitsbad 4 im Sumpf einer Rektifikationskolonne, die hier als kontinuierlichen Rektifikationskolonne 1 a wie in den Figuren 6A bis 6C veranschaulicht ist, eingetaucht ist. Der Badverdampfer ist damit als Sumpfverdampfer ausgebildet. Grundsätzlich kann ein entsprechender Badverdampfer jedoch auch im Sumpf einer Rektifikationskolonne 1, wie sie in den Figuren 1, 3, 4 und 5 veranschaulicht ist, oder an einer anderen Positionen einer Trenneinrichtung vorgesehen sein. Grundsätzlich ist entsprechenden Badverdampfern jedoch gemein, dass hier ein Wärmetauscher 3 in einem Flüssigkeitsbad 4 untergetaucht oder teilweise untergetaucht ist. Dem Wärmetauscher 3 wird dabei typischerweise ein gasförmiger Fluidstrom a zugeführt, der in dem Wärmetauscher 3 zumindest teilweise verflüssigt und aus dem Wärmetauscher 3 in Form eines zumindest teilweise verflüssigten Fluidstroms b abgezogen wird. Dies gilt auch für die in den Figuren 7B bis 7E veranschaulichten Ausführungsformen der vorliegenden Erfindung.

Grundidee der in den Figuren 7B bis 7E veranschaulichten Ausführungsformen der vorliegenden Erfindung ist die Einbringung von Magnetfeldern in Orte mit hohem lokalen Flüssigkeitsinhalt, wodurch auch außerhalb der dedizierten Stoffaustauscheinbauten einer Rektifikationskolonne in erheblichem Maße zur Stofftrennung beigetragen werden kann. Aufgrund der homogenen Feldanteile des Magnetfelds kann es insbesondere zu einer spontanen Phasentrennung, insbesondere unter gleichzeitiger Änderung der Fluidtemperatur, kommen. In entsprechender Weise können die in den Figuren 7B bis 7E veranschaulichten Maßnahmen auch in Kondensatoren, insbesondere Kopfkondensatoren bzw. deren Mantelräumen, vorgesehen sein.

In der in Figur 7B veranschaulichten Ausführungsform werden Permanentmagneten 2 bzw. entsprechende Magnetplatten, auch hier nur jeweils teilweise bezeichnet, radial um den Wärmetauscher einerseits und die Wand der kontinuierlichen Rektifikationskolonne 1a andererseits angeordnet. Dies kann beispielsweise wie unter Bezugnahme auf die Figur 3 erläutert erfolgen, auf die bezüglich weiterer Details explizit hingewiesen wird. Die magnetischen Feldlinien in den homogenen Feldbereichen der sich ausbildenden Magnetfelder verlaufen hier horizontal zur Richtung der Schwerkraft, wie auch bereits zuvor zu Figur 3 erläutert.

In der in Figur 7C veranschaulichten Ausführungsform sind hingegen Permanentmagneten 2, wiederum nur teilweise bezeichnet, in dem Flüssigkeitsbad 4 und an der Oberfläche desselben bereitgestellt. Die magnetischen Feldlinien verlaufen in den homogenen Feldbereichen parallel zur Richtung der Schwerkraft, so dass die bereits zu den Figuren 4 und 5 erläuterten Effekte erzielt werden können. Auf diese Figuren wird daher hier ausdrücklich verwiesen.

In der in Figur 7D veranschaulichten Ausführungsform sind innerhalb und in der Nähe der Wand der kontinuierlichen Rektifikationskolonne 1 a eine oder mehrere, ähnlich wie in der Figur 6C im Querschnitt veranschaulichte Magnetspulen 2a vorgesehen. Durch diese kann bzw. können die unter Bezugnahme auf die Figur 6C erläuterten Effekte bewirkt werden, weshalb zu weiteren Details auf diese Figur verwiesen wird. Diese Effekte stellen sich dabei in dem Flüssigkeitsbad 4 und in dem in dem Wärmetauscher 3 vorhandenen Fluid ein, weil die homogenen Feldanteile hier wirken können.

In der in Figur 7E veranschaulichten Ausführungsform sind hingegen eine oder mehrere Magnetspulen 2A konzentrisch um und in der Nähe des Wärmetauschers 3 angeordnet. Auf diese Weise werden die Effekte der homogenen Feldanteile des sich ausbildenden Magnetfelds in dem Fluid in dem Wärmetauscher 3 wirksam.

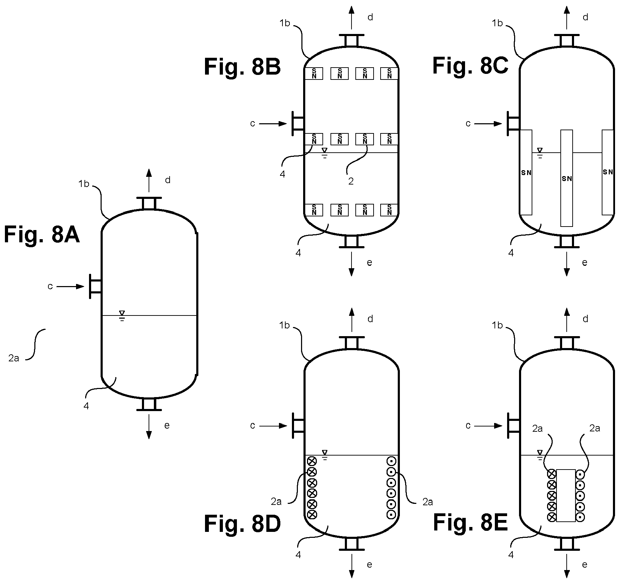

Die Figuren 8A bis 8E veranschaulichen Phasenabscheider gemäß Ausführungsformen der vorliegenden Erfindung. Die in den Figuren 8A bis 8E am Beispiel von Phasenabscheidern veranschaulichten Maßnahmen können dabei jeweils auch beispielsweise in Vorratsbehältern zum Einsatz kommen. Da hier im Sinne der vorliegenden Erfindung eine Trennung erfolgt, handelt es sich auch bei diesen Phasenabscheidern, die hier insgesamt jeweils mit 1 b bezeichnet sind, um Trenneinrichtungen.

Die grundsätzliche Funktion eines entsprechenden Phasenabscheiders 1 b ist in Figur 8A veranschaulicht. Wie hier gezeigt, wird einem Phasenabscheider 1b ein Fluidstrom c, insbesondere ein Zweiphasengemisch, zugeführt. In dem Phasenabscheider 1 b scheidet sich eine flüssige Phase, die ein Flüssigkeitsbad 4 ausbildet, ab. Gasförmig verbleibendes Fluid kann in Form eines Stoffstroms d aus dem Phasenabscheider 1 b abgezogen werden. Flüssigkeit kann dem Phasenabscheider 1 b in Form eines Stoffstroms e entnommen werden.

In der in Figur 8B veranschaulichten Ausführungsform der Erfindung sind in den Phasenabscheidern 1a Magnete bzw. Magnetplatten 2, die auch hier nur teilweise bezeichnet sind, im Wesentlichen in derselben Weise wie zu den Figuren 4 und 5 bezüglich einer Rektifikationskolonne 1 mit Trennböden und zu der Figur 7C bezüglich eines Badverdampfers veranschaulicht, angeordnet. Bezüglich der vorteilhaften Effekte einer entsprechenden Anordnung sei auf die dortigen Erläuterungen verwiesen.

In der in Figur 8C veranschaulichten Ausführungsform der Erfindung sind in den Phasenabscheider 1a Magnete bzw. Magnetplatten 2, die auch hier nur teilweise bezeichnet sind, im Wesentlichen in derselben Weise wie zu Figur 3 bezüglich einer Rektifikationskolonne 1 mit Trennböden und zu der Figur 7B bezüglich eines Badverdampfers veranschaulicht, angeordnet. Bezüglich der vorteilhaften Effekte sei auch hier auf die dortigen Erläuterungen verwiesen.

In denen den Figuren 8B und 8E veranschaulichten Phasenabscheidern 1a gemäß weiteren Ausführungsformen der Erfindung sind jeweils eine oder mehrere Magnetspulen 2a vorgesehen, die im Wesentlichen ähnlich wie in den Badverdampfern gemäß den in den Figuren 7D und 7E veranschaulichten Ausführungsformen angeordnet sind. Auf die dortigen Erläuterungen wird daher verwiesen.

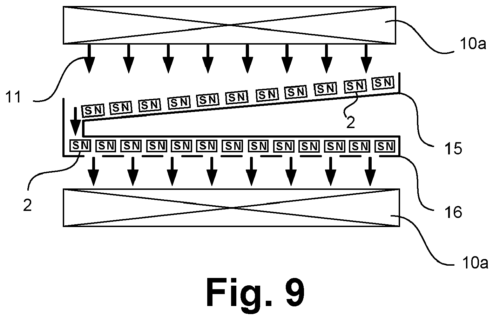

Figur 9 veranschaulicht einen Flüssigkeitssammler 15 und Flüssigkeitsverteiler 16 gemäß einer Ausführungsform der vorliegenden Erfindung. Diese sind dafür eingerichtet, beispielsweise von einem Packungssegment 10a einer entsprechenden Rektifikationskolonne 1a (nicht dargestellt) herabrieselndes Fluid 11 zu sammeln (Flüssigkeitssammler 15) und auf ein darunterliegendes Packungssegment 10a zu verteilen (Flüssigkeitsverteiler 16). Durch den Einsatz von Permanentmagneten 2 bzw. Magnetplatten, die auch hier nur teilweise bezeichnet sind, können auch hier die mehrfach erläuterten positiven Effekte erzielt werden. Auch in diesen, nicht dediziert zur Trennung vorgesehenen Elementen kann daher eine Trennung erzielt werden, so dass es sich auch hier um Trenneinrichtung im Sinne der Erfindung handelt.

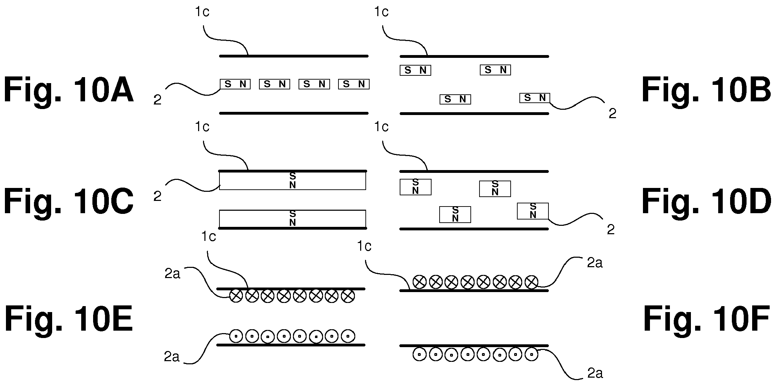

Figuren 10A bis 10F veranschaulichen Rohre und Kanäle gemäß Ausführungsformen der vorliegenden Erfindung. Auch diese sind nicht dediziert zur Trennung vorgesehen, können jedoch durch den Einsatz von homogenen Feldbereichen von Magnetfeldern entsprechend ertüchtigt werden. Die Rohrwandlungen sind jeweils mit 1 c bezeichnet. Gemäß den in den Figuren 10A bis 10D veranschaulichten Ausführungsformen sind Permanentmagneten 2 in der jeweils dargestellten Anordnung bereitgestellt. Gemäß den in den Figuren 10E und 10F veranschaulichten Ausführungsformen sind Magnetspulen 2a vorgesehen. Zu den jeweils erzielbaren Vorteilen sei ausdrücklich auf die obigen Erläuterungen verwiesen.

## Patentansprüche

1. Verfahren zur Trennung eines tiefkalten sauerstoffhaltigen Komponentengemischs, bei dem unter Verwendung des Komponentengemischs in einer Trenneinrichtung (1) durch Verdampfung und/oder Kondensation eine flüssige und eine gasförmige Phase gebildet werden, **dadurch gekennzeichnet, dass** ein oder mehrere Magnetfelder erzeugt werden, das oder die einen oder mehrere homogene Feldbereiche in zumindest einem Teil eines oder mehrerer für die Verdampfung und/oder Kondensation eingerichteter Bereiche der Trenneinrichtung (1) aufweisen.

2. Verfahren nach Anspruch 1 bei dem der Mittelwert der magnetischen Feldstärke in dem oder den homogenen Feldbereichen um nicht mehr als 1%, 5%, 10%, 20% oder 50% vom maximalen Wert der Feldstärke innerhalb desselben Feldbereichs abweicht.

3. Verfahren nach Anspruch 1 oder 2, bei dem der oder die homogenen Feldbereiche sich über zumindest 1 %, 5%, 10%, 20%, 50%, 90% oder 99% des oder der für die Verdampfung und/oder Kondensation eingerichteten Bereiche erstrecken.

4. Verfahren nach einem der vorstehenden Ansprüche, bei dem als die Trenneinrichtung (1) eine Rektifikationskolonne verwendet wird, wobei der oder die für die Verdampfung und/oder Kondensation eingerichteten Bereiche als ein oder mehrere Trennböden, Flüssigkeitssammler oder Flüssigkeitsverteiler, Badverdampfer und/oder Badkondensatoren ausgebildet sind.

5. Verfahren nach einem der Ansprüche 1 bis 3, bei dem als die Trenneinrichtung (1) eine Rohrleitung verwendet wird, durch welche die flüssige Phase und die gasförmige Phase in Form einer Zweiphasenströmung geführt werden.

6. Verfahren nach einem der Ansprüche 1 bis 3, bei dem als die Trenneinrichtung (1) ein Phasenabscheider, ein Vorratsbehälter und/oder ein Hohlraum innerhalb eines strukturierten oder unstrukturierten Stoffaustauschelements, insbesondere einer Rektifikationskolonne, verwendet wird.

7. Verfahren nach einem der vorstehenden Ansprüche, bei dem das oder die Magnetfelder unter Verwendung eines oder mehrerer Permanentmagneten erzeugt wird oder werden.

8. Verfahren nach Anspruch 7, bei dem der oder die Permanentmagneten eine Legierung auf Basis von Neodym, Samarium, Eisen, Nickel oder Aluminium oder einer Mischung zumindest zweier dieser Komponenten aufweisen.

9. Verfahren nach einem der vorstehenden Ansprüche, bei dem das oder die Magnetfelder unter Verwendung eines oder mehrerer Elektromagneten erzeugt wird oder werden.

10. Verfahren nach Anspruch 9, bei dem der oder die Elektromagneten mit Gleich- oder Wechselstrom betrieben werden.

11. Verfahren nach Anspruch 9, bei dem der oder die Elektromagneten einen Supraleiter, insbesondere einen Hochtemperatursupraleiter, aufweisen.

12. Verfahren nach einem der Ansprüche 9 bis 11, bei dem der oder die Elektromagneten direkt durch Erwärmung oder Verdampfung eines kryogenen Mediums gekühlt werden.

13. Verfahren nach einem der vorstehenden Ansprüche, bei dem als das Komponentengemisch Luft oder ein unter Verwendung von Luft gebildetes Komponentengemisch verwendet wird.

14. Trenneinrichtung (1), die zur Trennung eines tiefkalten, sauerstoffhaltigen Komponentengemischs eingerichtet ist, wobei die Trennung umfasst, unter Verwendung des Komponentengemischs in der Trenneinrichtung (1) durch Verdampfung und/oder Kondensation eine flüssige und eine gasförmige Phase zu bilden, **gekennzeichnet durch,** Mittel, die dafür eingerichtet sind, ein oder mehrere Magnetfelder zu erzeugen, die einen oder mehrere homogene Feldbereiche in zumindest einem Teil eines oder mehrerer für die Verdampfung und/oder Kondensation eingerichteter Bereiche der Trenneinrichtung (1) aufweisen.

15. Trenneinrichtung (1) nach Anspruch 14, die zur Durchführung eines Verfahrens nach einem der Ansprüche 13 eingerichtet ist.
